# EUROPÄISCHE PATENTANMELDUNG

(11) **EP 1 440 753 A1**
(43) Veröffentlichungstag der Anmeldung: **28.07.2004**
(21) Anmeldenummer: 03405030.2
(22) Anmeldetag: 24.01.2003
(51) Int. Cl.: B23B 3/16, B23B 5/00, B23B 49/04

(54) **Verfahren zum Spannen eines Werkstücks auf einer Werkzeugmaschine**

(71) Anmelder: Liechti Engineering AG, 3550 Langnau im Emmental (CH)
(72) Erfinder: Schär, Hans, 3550 Langnau i.E. (CH); Lehmann, Fritz, 3550 Langnau i.E. (CH); Liechti, Ralph, 3073 Gümligen (CH)
(74) Vertreter: BOVARD AG - Patentanwälte

(57) **Zusammenfassung**

Damit eine Zentrierbohrung (10) in einem Werkstück (1) genau mit der Rotationsachse (A) des Werkstücks (1) ausgerichtet ist, wird die Zentrierbohrung (10) angebracht, nachdem das Werkstück (1) in Spannmitteln (2) eingespannt wurde. Einer Herstellung der Zentrierbohrung (10) mit einem in eine Werkzeugspindel der Werkzeugmaschine eingespannten, rotierenden Werkzeug steht der Reitstock (4) im Weg. Deshalb werden die Werkstück-Spannmittel (2) mit dem eingespannten Werkstück (1) rotierend angetrieben und in die Werkzeug-Spannvorrichtung (6) wird ein Werkzeug (8) mit einem Schaft (7) eingespannt. Die Achse (C) der Werkzeug-Spannvorrichtung (6) und die Rotationsachse (A) der Werkstück-Spannmittel (2) schliessen dabei einen Winkel ein, so dass das nicht rotierende Werkzeug (8) in den Raum zwischen Werkstück (1) und Reitstock (4) geführt werden kann.

## Beschreibung

Die Erfindung betrifft ein Verfahren zum Spannen eines Werkstücks auf einer Werkzeugmaschine, mit der Fräsbearbeitungen ausführbar sind, wobei die Werkzeugmaschine mindestens eine Werkzeugspindel mit einer rotierend antreibbaren Werkzeug-Spannvorrichtung, eine erste Spannstelle mit rotierend antreibbaren Werkstück-Spannmitteln und eine zweite Spannstelle mit einem Reitstock aufweist, welcher Reitstock in Richtung der Rotationsachse der Werkstück-Spannmittel verschiebbar ist.

Um Werkstücke in Fräsmaschinen besonders sicher gegen Verformungen durch die Schnittkraft, beispielsweise Biegeverformungen, einzuspannen, werden üblicherweise Werkstückspannvorrichtungen verwendet, bei denen das Werkstück zwischen zwei Spannstellen gehalten wird. Dabei werden insbesondere so genannte Rundstationen als Werkstückspannvorrichtungen verwendet, die eine angetriebene Rotationsachse haben, die zwischen den beiden Spannstellen verläuft. In einer ersten Spannstelle ist das Werkstück fest eingespannt und das Spannmittel der ersten Spannstelle ist rotatorisch angetrieben. An der zweiten, als Reitstock ausgebildeten Spannstelle ist das Werkstück mittels einer Zentrierspitze in einer zuvor in das Werkstück eingebrachten Zentrierbohrung gehalten. Durch eine translatorische Verfahrbarkeit der Reitstockspitze kann das Werkstück in die Rundstation eingesetzt und wieder entnommen werden.

Wenn die Zentrierbohrung auf einer anderen Werkzeugmaschine in das Werkstück eingearbeitet wird, ist es sehr schwierig, die so hergestellte Zentrierbohrung beim Einspannen des Werkstücks für die Fräsbearbeitung genau mit der genannten Rotationsachse auszurichten. Zudem stellt die Fertigung auf zwei Werkzeugmaschinen einen hohen maschinentechnischen Aufwand dar. Es besteht daher der Wunsch, die Zentrierbohrung anzubringen, nachdem das Werkstück in der ersten Spannstelle eingespannt wurde. Dies könnte prinzipiell mit einem in eine Werkzeugspindel der Werkzeugmaschine eingespannten, rotierenden Werkzeug bewerkstelligt werden, jedoch ist dabei der Reitstock im Weg.

Eine bekannte Lösung dieses Problems sieht vor, den Reitstock mit einer Spannvorrichtung für ein Werkzeug zum Herstellen einer Zentrierbohrung auszustatten. Diese Spannvorrichtung kann an Stelle der Zentrierspitze eingesetzt werden oder zusammen mit diesem auf einem Revolverkopf montiert sein. Eine andere bekannte Lösung des geschilderten Problems besteht darin, den Reitstock so zu lagern, dass im Wesentlichen rechtwinklig zur Rotationsachse des Werkstücks verschiebbar ist, um so an der Stirnseite des Werkstücks Platz für ein Werkzeug zum Herstellen einer Zentrierbohrung zu schaffen. Gemäss einer dritten bekannten Lösung ist der Reitstock um eine im Wesentlichen rechtwinklig zur Rotationsachse des Werkstücks verlaufende Achse schwenkbar ausgebildet.

Die Nachteile dieser bekannten Lösungen bestehen insbesondere in einer komplizierten und dadurch teuren Ausstattung der Werkzeugmaschine.

Der Erfindung liegt die Aufgabe zugrunde, ein Verfahren und eine Vorrichtung vorzuschlagen, die es ermöglichen, auf einer Werkzeugmaschine an einem Werkstück eine Zentrierbohrung anzubringen, ohne dass dazu die Werkzeugmaschine selbst baulich angepasst werden muss.

Diese Aufgabe wird durch ein Verfahren gelöst, das dadurch gekennzeichnet ist, dass das Werkstück in die Werkstück-Spannmittel eingespannt wird und die Werkstück-Spannmittel mit dem eingespannten Werkstück rotierend angetrieben werden, dass in die Werkzeug-Spannvorrichtung ein Werkzeug mit einem Schaft eingespannt wird, wobei die Achse der Werkzeug-Spannvorrichtung und die Rotationsachse der Werkstück-Spannmittel einen Winkel einschliessen, dass die Werkzeug-Spannvorrichtung nicht rotiert wird, während mit dem Werkzeug an der Stirnseite des rotierenden Werkstücks eine Zentrierbohrung erzeugt wird, dass das Werkzeug aus dem Bereich der Stirnseite des Werkstücks gefahren wird und der Reitstock zum Werkstück zugestellt wird, bis eine am Reitstock fest oder drehbar gehaltene Zentrierspitze in die Zentrierbohrung eingreift.

Diese erfindungsgemässe Lösung hat die Vorteile, dass alle für das Herstellen einer Zentrierbohrung am Werkstück erforderlichen Bewegungen der Werkzeugmaschine durch an der Werkzeugmaschine ohnehin vorhandene Antriebe ausgeführt werden können, dass das Werkzeug zum Herstellen der Zentrierbohrung durch eine gegebenenfalls vorhandene Werkzeug-Wechselvorrichtung automatisch eingesetzt und entnommen werden kann und dass ansonsten keine Änderungen an der Werkzeugmaschine, insbesondere am Reitstock erforderlich sind.

Nach einer Ausführungsart des erfindungsgemässen Verfahrens schliessen die Achse der Werkzeug-Spannvorrichtung und die Rotationsachse der Werkstück-Spannmittel einen Winkel von 90° ein. Dies entspricht einer häufig anzutreffenden Anordnung der Achse der Werkzeugspindel in Bezug zur Werkstückachse.

Ein anderer Aspekt der Erfindung betrifft eine Vorrichtung zur Durchführung des Verfahrens, bestehend aus einem Werkzeug mit einem Schaft. Anders als bei üblichen Werkzeugen mit einem Schaft schliessen die Achse des Werkzeugs und die Achse des Schafts einen Winkel ein. Dadurch kann das Werkzeug mit geringem Platzbedarf in Richtung der Rotationsachse des Werkstücks an die Stirnseite des Werkstücks herangeführt werden. Das Werkzeug kann beispielsweise ein Zentrierbohrer oder ein Drehstahl sein. Ferner kann das Werkzeug auswechselbar am Schaft befestigt oder mit diesem einstückig ausgebildet sein.

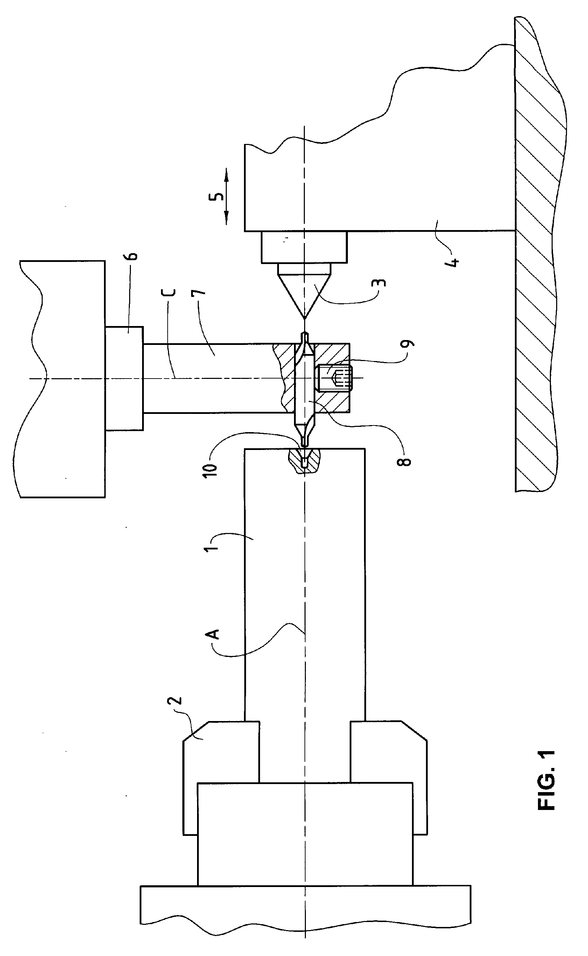

Ein Ausführungsbeispiel der Erfindung wird nachfolgend unter Bezugnahme auf die beiliegende einzige Figur 1, die ein Beispiel einer entsprechenden Anordnung an einer Werkzeugmaschine zeigt, näher beschrieben.

Die einzige Figur 1 zeigt einige wesentliche Elemente einer bekannten Werkzeugmaschine. Ein Werkstück 1 ist mit Werkstück-Spannmitteln 2 gehalten, die um eine Werkstückachse A rotierend antreibbar sind und eine erste Spannstelle bilden. Eine Zentrierspitze 3, die an einem Reitstock 4 fest oder drehbar gehalten ist, bildet eine zweite Spannstelle. Der Reitstock 4 ist in Richtung des Doppelpfeils 5 verstellbar. Koaxial mit einer Werkzeugachse C, die in einem rechten Winkel zur Werkstückachse A verläuft, ist eine rotierend antreibbare Werkzeug-Spannvorrichtung 6 angeordnet. In dieser Werkzeug-Spannvorrichtung 6 ist ein Schaft 7 eingespannt, der an seinem in der Figur unteren Ende eine Querbohrung aufweist, in der ein Zentrierbohrer 8 aufgenommen und mittels einer Stellschraube 9 festgehalten ist. Mit diesem Zentrierbohrer wird in der nachfolgend beispielsweise beschriebenen Weise eine Zentrierbohrung 10 im Werkstück 1 angebracht.

Beim Werkstück 1 kann es sich beispielsweise um einen prismatischen Rohling aus Stahl handeln, aus dem durch Fräsbearbeitung eine Turbinenschaufel hergestellt werden soll. Das Werkstück 1 wird in die Werkstück-Spannmittel 2 eingespannt, welche anschliessend in Rotation versetzt werden. Der Reitstock 4 befindet sich in dieser Phase noch in einem Abstand vom Werkstück 1. Eine Werkzeug-Wechselvorrichtung (in der Figur nicht dargestellt) holt aus einem Werkzeug-Magazin (in der Figur nicht dargestellt) den Schaft 7 mit dem darin eingespannten Zentrierbohrer 8. Der Schaft wird in die Werkzeug-Spannvorrichtung 6 eingespannt und diese wird so weit gedreht, bis die Achse des Zentrierbohrers 8 parallel mit der Werkstückachse A ausgerichtet ist. Dann wird der Zentrierbohrer 8 in die in der Figur dargestellte Position gebracht, in der seine Achse mit der Werkstückachse A fluchtet. Die Werkstück-Spannmittel 2 werden in Drehung versetzt und der Zentrierbohrer 8 wird zum Werkstück hin bewegt, so lange, bis die entstehende Zentrierbohrung 10 die gewünschte Tiefe erreicht hat. Anschliessend wird der Zentrierbohrer 8 zurückgezogen und aus dem stirnseitigen Bereich des Werkstückes 1 heraus gefahren. Nun wird der Reitstock 4 zum Werkstück 1 hin bewegt, bis die Zentrierspitze 3 in der Zentrierbohrung 10 sitzt. Gleichzeitig wird der Schaft 7 mit dem Zentrierbohrer 8 durch die Werkzeug-Wechselvorrichtung aus der Werkzeug-Spannvorrichtung 6 entnommen und durch ein Fräswerkzeug ersetzt. Mit diesem Fräser wird nun das beidseitig gestützte Werkstück 1 bearbeitet.

Wie man auf der Figur sieht, benötigt die zur Ausführung des erfindungsgemässen Verfahrens verwendete Vorrichtung an der Stirnseite des Werkstückes 1 sehr wenig Platz, so dass der Reitstock 4 nur um eine geringe Distanz vom Werkstück weggefahren werden muss, damit die Zentrierbohrung 10 am Werkstück 1 angebracht werden kann. Anders, als in der Figur dargestellt, kann natürlich auch ein anderes Werkzeug zur Herstellung der Zentrierbohrung 10 verwendet werden, beispielsweise ein Drehstahl. Auch muss der Winkel zwischen der Längsachse des Werkstücks und der Achse des Werkzeuges nicht zwingend 90° betragen. Als Werkzeug kann nicht nur ein Zentrierbohrer verwendet werden, sondern prinzipiell verschiedene Arten von spanabhebenden Werkzeugen, insbesondere auch ein Drehstahl. Das Werkzeug 8 kann am Schaft 7 wie dargestellt abnehmbar befestigt sein, es könnte aber auch einstückig mit dem Schaft ausgebildet sein.

## Patentansprüche

1. Verfahren zum Spannen eines Werkstücks auf einer Werkzeugmaschine, mit der Fräsbearbeitungen ausführbar sind, wobei die Werkzeugmaschine mindestens eine Werkzeugspindel mit einer rotierend antreibbaren Werkzeug-Spannvorrichtung (6), eine erste Spannstelle mit rotierend antreibbaren Werkstück-Spannmitteln (2) und eine zweite Spannstelle mit einem Reitstock (4) aufweist, welcher Reitstock in Richtung der Rotationsachse (A) der Werkstück-Spannmittel (2) verschiebbar ist, **dadurch gekennzeichnet, dass** das Werkstück (1) in die Werkstück-Spannmittel (2) eingespannt wird und die Werkstück-Spannmittel (2) mit dem eingespannten Werkstück (1) rotierend angetrieben werden, dass in die Werkzeug-Spannvorrichtung (6) ein Werkzeug (8) mit einem Schaft (7) eingespannt wird, wobei die Achse (C) der Werkzeug-Spannvorrichtung (6) und die Rotationsachse (A) der Werkstück-Spannmittel (2) einen Winkel einschliessen, dass die Werkzeug-Spannvorrichtung (6) nicht rotiert wird, während mit dem Werkzeug (8) an der Stirnseite des rotierenden Werkstücks (1) eine Zentrierbohrung (10) erzeugt wird, dass das Werkzeug (8) aus dem Bereich der Stirnseite des Werkstücks (1) gefahren wird und der Reitstock (5) zum Werkstück (1) zugestellt wird, bis eine am Reitstock (5) fest oder drehbar gehaltene Zentrierspitze (3) in die Zentrierbohrung (10) eingreift.

2. Verfahren nach Anspruch 1, **dadurch gekennzeichnet, dass** die Achse (C) der Werkzeug-Spannvorrichtung (6) und die Rotationsachse (A) der Werkstück-Spannmittel (2) einen Winkel von 90° einschliessen.

3. Vorrichtung zur Durchführung des Verfahrens nach Anspruch 1 oder 2, bestehend aus einem Werkzeug (8) mit einem Schaft (7), **dadurch gekennzeichnet, dass** die Achse des Werkzeugs (8) und die Achse des Schafts (7) einen Winkel einschliessen.

4. Vorrichtung nach Anspruch 3, **dadurch gekennzeichnet, dass** das Werkzeug ein Zentrierbohrer (8) ist.

5. Vorrichtung nach Anspruch 3, **dadurch gekennzeichnet, dass** das Werkzeug ein Drehstahl ist.

6. Vorrichtung nach einem der Ansprüche 3 bis 5, **dadurch gekennzeichnet, dass** das Werkzeug auswechselbar am Schaft befestigt ist.

7. Vorrichtung nach einem der Ansprüche 3 bis 5, **dadurch gekennzeichnet, dass** das Werkzeug einstückig mit dem Schaft ausgebildet ist.
